# EUROPÄISCHE PATENTSCHRIFT

(11) **EP 1 051 369 B1**
(45) Veröffentlichungstag und Bekanntmachung des Hinweises auf die Patenterteilung: **19.02.2003**
(21) Anmeldenummer: 99973011.2
(22) Anmeldetag: 24.11.1999
(51) Int. Cl.: C04B 35/043, C04B 35/66

(54) **FEUERFESTE KERAMISCHE MASSE UND DEREN VERWENDUNG**
REFRACTORY CERAMIC MASS AND THE USE THEREOF
MATIERE CERAMIQUE REFRACTAIRE ET SON UTILISATION

(30) Priorität: 30.11.1998 DE 19854971; 22.12.1998 DE 19859372
(43) Veröffentlichungstag der Anmeldung: 15.11.2000
(73) Patentinhaber: Veitsch-Radex GmbH & Co, 1100 Wien (AT)
(72) Erfinder: BUCHEBNER, Gerald, A-8700 Leoben (AT); RUMPF, Dietmar, A-8700 Leoben (AT); DEUTSCH, Josef, A-8700 Leoben (AT)
(74) Vertreter: Becker, Thomas, Dr., Dipl.-Ing.
(86) Internationale Anmeldenummer: EP9909081
(87) Internationale Veröffentlichungsnummer: WO00032536

(56) Entgegenhaltungen:
- US-A- 4 971 934
- US-A- 5 723 394

## Beschreibung

Die Erfindung betrifft eine feuerfeste keramische Masse sowie deren Verwendung.

Speziell bezieht sich die Erfindung auf eine basische feuerfeste keramische Masse auf Basis eines MgO-Sinters (Sintermagnesia). MgO-Sinter ist wesentlicher Bestandteil aller MgO- und MgO-Spinell-Erzeugnisse. Der MgO-Sinter wird mineralisch als Periklas bezeichnet. Wesentliche Rohstoffgrundlage zur Herstellung von MgO-Sinter ist Magnesit, also Magnesiumcarbonat, beziehungsweise eine synthetische Magnesiaquelle.

Zur Einstellung bestimmter Werkstoffeigenschaften, insbesondere zur Verbesserung der chemischen Resistenz gegen Schlacken, der Verbesserung der Duktilität sowie der Temperatur-Wechselbeständigkeit sind feuerfeste keramische Massen auf Basis MgO-Sinter in Kombination mit verschiedenen Zusätzen bekannt. Hierzu gehört beispielsweise Chromerz zur Herstellung sogenannter Magnesiachromitsteine. Ihr Vorteil liegt in einer geringeren Sprödigkeit beziehungsweise höheren Duktilität gegenüber reinen Magnesiasteinen. Gegenüber nicht-basischen Schlacken besteht außerdem eine verbesserte Korrosionsbeständigkeit.

Obwohl sich derartige Produkte grundsätzlich bewährt haben, ist es ein ständiges Ziel, feuerfeste keramische Massen und daraus hergestellte Formteile zu optimieren. So werden zum Beispiel zur Auskleidung von Industrieöfen, bei denen mit nennenswerten mechanischen Beanspruchungen der feuerfesten Auskleidung zu rechnen ist, Produkte gefordert, deren Sprödigkeit so gering wie möglich ist. Hierzu zählen beispielsweise Drehöfen der Zementindustrie, wo es durch eine Ofendeformation zu einer erheblichen mechanischen Beanspruchung der feuerfesten Auskleidung kommen kann, aber auch Öfen der Stahl- und Nichteisenmetallindustrie, wo insbesondere thermische Spannungen beim Aufheizen und bei Temperaturwechseln zu Problemen führen.

Ein relativ hoher Anteil an Alkalien sowie reduzierende Bedingungen, insbesondere aufgrund des verwendeten Brennstoffs in einem Industrieofen, führen bei der Verwendung von chromerzhaltigen Produkten zu Schwierigkeiten. Die Alkali-Chromat- und Alkalichromsulfatbildung sowie das Auftreten von 6-wertigem Chrom stellen vor allem ein Umweltproblem dar.

Aus diesem Grund wurden Al₂O₃-haltige Produkte entwickelt, die durch Zusatz von Tonerde oder Magnesium-Aluminiumspinell (MgAl₂O₄) zur Steinmischung (MgO-Matrix) erzeugt werden. Diese chromoxidfreien Qualitäten weisen zum Teil sehr gute mechanische Eigenschaften auf, benötigen aber vielfach hochwertige und teure Rohstoffe.

Die DE 35 27 789 A1 beschreibt grobkeramische Formkörper, bei deren Herstellung während des Brennprozesses Minerale des Systems R²⁺O • R₂³⁺O₃ gebildet werden, wobei R²⁺ Mg und Fe und R³⁺ Al, Cr und/oder Fe sein soll. Auch diese Steine sind abgesehen von einer oft undefinierten Bildung der genannten Minerale beim Brand nicht ausreichend alkalibeständig oder resistent gegen Schmelzen.

Die DE 44 03 869 C2 beschreibt feuerfeste Massen und daraus hergestellte Formteile, die neben MgO Sinter einen vorsynthetisierten Spinell des Herzynit-Typs enthalten. Diese Steine haben sich hervorragend bewährt, insbesondere aufgrund ihrer hohen Gefügeelastizität. Ihre Resistenz gegen einen Alkali- oder Alkalisalzangriff ist jedoch verbesserungsbedürftig.

Der Erfindung liegt die Aufgabe zugrunde, eine feuerfeste keramische Masse zur Verfügung zu stellen, die nach Verarbeitung zu gebrannten Formteilen am gebrannten Produkt mechanische Eigenschaften und eine Duktilität aufweist, die mit den entsprechenden Werten der Steine gemäß DE 44 03 869 C2 vergleichbar sind und darüber hinaus eine verbesserte Resistenz gegen einen Alkali- oder Alkalisalzangriff aufweisen. Der Stein soll zur Verwendung in Öfen geeignet sein, in denen eine Alkali- oder Alkalisalzbeständigkeit insbesondere in Verbindung mit einer reduzierten Wärmeleitfähigkeit gefordert wird.

Überraschend wurde nun festgestellt, daß dieses Ziel durch die Kombination eines MgO-Sinters mit mindestens einem Spinell vom Galaxit-Typ (Mg, Mn) (Fe, Al)₂O₄ oder Jacobsit-Typ (Mg, Mn)•(Fe, Al)₂O₄ erreicht werden kann.

Dementsprechend betrifft die Erfindung in ihrer allgemeinsten Ausführungsform eine feuerfeste keramische Masse, die
a) 60 bis 99 Gew.-% MgO-Sinter, sowie
b) 1 bis 40 Gew.-% mindestens eines Spinells vom Galaxit-Typ oder Jacobsit-Typ
enthält.

Der MgO-Sinter kann ganz oder teilweise durch Schmelzmagnesia ersetzt werden.

Der mindestens eine Spinell wird bevorzugt als vorsynthetisierter Spinell dem MgO-Sinter bei der Aufbereitung zugemischt, kann aber auch beim Brand in-situ gebildet werden.

Nach einer Ausführungsform sind die Anteile an MgO-Sinter auf 85 bis 97 Gew.-% und die der Spinelle auf 3 bis 15 Gew.-% präzisiert.

Die Zusammensetzung des Galaxit- oder Galaxit-ähnlichen Spinells soll-innerhalb folgender Bereichsgrenzen liegen:
a) 25 bis 55 Gew.-% Mangan, berechnet als MnO,
b) 45 bis 65 Gew.-% Al₂O₃,
c) < 15 Gew.-% MgO,
d) < 5 Gew.-% Eisen, berechnet als FeO,
e) Rest: Verunreinigungen.

Eine beispielhafte Zusammensetzung dieses Spinells ist dann:
a) 51 Gew.-% Al₂O₃,
b) 39 Gew.-% MnO
c) 1 Gew.-% MgO,
d) 4 Gew.-% FeO + Fe₂O₃,
e) Rest: Verunreinigungen.

Die Zusammensetzung des Jacobsit- oder Jacobsit-ähnlichen Spinells wird wie folgt angegeben:
a) 15 bis 35 Gew.-% Mangan, berechnet als MnO,
b) 60 bis 70 Gew.-% Eisen, berechnet als Fe₂O₃,
c) < 22 Gew.-% MgO.
d) Rest: Verunreinigungen.

Eine beispielhafte Zusammensetzung dieses Spinells kann wie folgt aussehen:
a) 23 bis 30 Gew.-% Mangan, berechnet als MnO,
b) 66 bis 70 Gew.-% Eisen, berechnet als Fe₂O₃,
c) < 15 Gew.-% MgO,
d) Rest: Verunreinigungen.

In jedem Fall ergänzen sich die Bestandteile der Spinelle jeweils zu 100 Gew.-%.

Weitere Ausführungsformen der Erfindung sehen vor, mindestens einen Spinell als Schmelzspinell einzusetzen; ebenso kann aber auch ein Sinterspinell Verwendung finden.

Während der MgO-Sinter in einer Kornfraktion < 8 mm und nach einer Ausführungsform < 5 mm eingesetzt werden soll, hat es sich als sinnvoll herausgestellt, den oder die Spinell(e), relativ zum MgO-Sinter, in einer kleineren Fraktion einzusetzen, wobei die Kornobergrenze bei 5 mm liegen sollte.

Dabei kann eine Teilfraktion des MgO-Sinters als Feinfraktion < 125 µm eingesetzt werden, wobei dieser Anteil, bezogen auf die Gesamtmasse, 10 bis 35 Gew.-%, nach einer Ausführungsform: 15 bis 30 Gew.-% betragen kann.

Die Reaktions- und Sintermechanismen sind im einzelnen noch nicht vollständig geklärt. Die geforderten und erzielten verbesserten mechanischen Eigenschaften lassen sich nach bisherigen Erkenntnissen damit erklären, daß keine vollständige, dichte Versinterung zwischen den einzelnen Massebestandteilen erfolgt, so daß auch der aus der Masse hergestellte gebrannte, feuerfeste Formkörper eine gewisse "Elastizität" (Flexibilität) behält. Risse bilden sich allenfalls unter mechanischer Belastung aufgrund der unterschiedlichen Elastizitätsmodule des Sinters beziehungsweise des Spinells aus.

Die unter Verwendung der neuen Masse hergestellten gebrannten feuerfesten Steine zeigen eine Duktilität ähnlich den Steinen gemäß DE 44 03 869 C2.

Im besonderen zeichnen sich die erfindungsgemäßen Steine durch eine starke Unterdrückung von Korrosionsangriffen durch Alkalien und Alkalisalze aus. In einem praxisnahen Labortest wurden die erfindungsgemäßen Steine mit einem hohen MnO-Gehalt des Galaxit-Spinells Alkalisalzen des Systems K₂O-Na₂O-Cl-S ausgesetzt. In anschließender mineralogischer Untersuchung konnte im Vergleich zu Herzynit-Spinell-MgO-Steinen eine charakteristisch verbesserte Alkaliresistenz festgestellt werden.

Weiter wird die Wärmeleitfähigkeit der Steine in vorteilhafter Weise herabgesetzt.

Bei Einsatz eines Jacobsit-Spinells konnte die Alkali-Resistenz noch weiter gesteigert werden. Die Alkali-Resistenz bezieht sich auf das feuerfeste Steinmaterial generell, also beispielsweise auch auf mögliche (weitere) Bestandteile, wie einen MgO • Al₂O₃-Zusatz in der feuerfesten Steinmasse.

Die Wärmeleitfähigkeit konnte gegenüber konventionellen Steinen auf Basis MgO in Kombination mit einem MgO • Al₂O₃-Spinell um bis zu 50 % (auf die Hälfte) reduziert werden und beträgt beispielsweise bei 200°C ca. 3,7 W/mK und bei 800°C ca. 3,2 W/mK.

Hervorzuheben ist auch eine über das genannte Temperaturintervall (beispielsweise 200 bis 800°C) niedrige und nahezu konstante Wärmeleitfähigkeit. Während die Wärmeleitfähigkeit bei den genannten konventionellen Steinen mit 84 Gew.-% MgO und 16 Gew.% MgO-Al₂O₃-Spinell von 6,5 W/mK (200°C) auf 4 W/mK (800°C) abnahm, also um ca. ein Drittel, lagen die Vergleichswerte unter Verwendung eines Steins aus 92 Gew.-% MgO und 8 Gew.-% Jacobsit-Spinell bei 3,7 beziehungsweise 3,2 W/mK, entsprechend einer Reduzierung von lediglich etwa 15 %.

Daneben besitzen die Steine eine gute Heißkorrosionsfestigkeit.

Dies alles macht ihre Verwendung zum Beispiel als Auskleidungsmaterial im Zementdrehofen besonders geeignet.

## Patentansprüche

1. Feuerfeste keramische Masse, die:
a) 60 - 99 Gew.-% MgO-Sinter und/oder Schmelzmagnesia, sowie
b) 1 - 40 Gew.-% mindestens eine Spinells vom Galaxittyp oder Jacobsittyp
enthält.

2. Masse nach Anspruch 1, die
a) 85 bis 97 Gew.-% MgO-Sinter sowie
b) 3 bis 15 Gew.-% mindestens eines Spinells vom Galaxit-Typ oder Jacobsit-Typ
enthält.

3. Masse nach Anspruch 1, wobei der Galaxit-Spinell aus
a) 25 bis 55 Gew.-% Mangan, berechnet als MnO,
b) 45 bis 65 Gew.-% Al₂O₃,
c) < 15 Gew.-% MgO,
d) < 5 Gew.-% Eisen, berechnet als FeO
e) Rest Verunreinigungen
besteht.

4. Masse nach Anspruch 3, wobei der Galaxit-Spinell aus
a) 35 bis 42 Gew.-% Mangan, berechnet als MnO,
b) 45 bis 55 Gew.-% Al₂O₃,
c) < 5 Gew.-% MgO,
d) < 5 Gew.-% Eisen, berechnet als FeO,
e) Rest: Verunreinigungen
besteht.

5. Masse nach Anspruch 1, bei der der Jacobsit-Spinell aus
a) 15 bis 35 Gew.-% Mangan, berechnet als MnO,
b) 60 bis 70 Gew.-% Eisen, berechnet als Fe₂O₃,
c) < 22 Gew.-% MgO,
d) Rest: Verunreinigungen
besteht.

6. Masse nach Anspruch 1, bei der der Jacobsit-Spinell aus
a) 23 bis 30 Gew.-% Mangan, berechnet als MnO,
b) 66 bis 70 Gew.-% Eisen, berechnet als Fe₂O₃,
c) < 15 Gew.-% MgO,
d) Rest: Verunreinigungen
besteht.

7. Masse nach Anspruch 1, bei der mindestens ein Spinell ein Schmelzspinell ist.

8. Masse nach Anspruch 1, bei der der MgO-Sinter in einer Kornfraktion < 8 mm und mindestens ein Spinell in einer Kornfraktion < 5 mm vorliegt.

9. Masse nach Anspruch 1, bei der der MgO-Sinter in einer Kornfraktion < 5 mm vorliegt.

10. Masse nach Anspruch 1, bei der mindestens ein Spinell in einer Kornfraktion < 3 mm vorliegt.

11. Masse nach Anspruch 1, bei der der MgO-Sinter zumindest teilweise durch Schmelzmagnesia ersetzt ist.

12. Masse nach Anspruch 1, die frei von Cr-haltigen Bestandteilen ist.

13. Verwendung der Masse nach einem der Ansprüche 1 bis 12 zur Herstellung gebrannter feuerfester Formteile.

14. Verwendung eines Formteils nach Anspruch 13, wobei das Formteil einem Alkali- oder Alkalisalzangriff ausgesetzt ist.

## Claims

1. Refractory ceramic mass, comprising:
a) 60 to 99 wt.-% MgO-sinter and/or fused magnesia,
b) 1 to 40 wt.-% of at least one spinel of the Galaxite-type or Jacobsite-type.

2. Mass according to claim 1, comprising:
a) 85 to 97 wt.-% MgO sinter,
b) 3 to 15 wt.-% of at least one spinel of the Galaxite- or Jacobsite type.

3. Mass according to claim 1, wherein the Galaxite spinel comprises:
a) 25 to 55 wt.-% manganese, calculated as MnO,
b) 45 to 65 wt.-% Al₂O₃,
c) < 15 wt.-% MgO,
d) < 5 wt.-% iron, calculated as FeO,
e) the remainder being impurities.

4. Mass according to claim 3, wherein the Galaxite spinel comprises:
a) 35 to 42 wt.-% manganese, calculated as MnO,
b) 45 to 55 wt.-% Al₂O₃,
c) < 5 wt.-% MgO,
d) < 5 wt.-% iron, calculated as FeO,
e) the remainder being impurities.

5. Mass according to claim 1, wherein the Jacobsite spinel comprises:
a) 15 to 35 wt.-% manganese, calculated as MnO
b) 60 to 70 wt.-% iron, calculated as Fe₂O₃,
c) < 22 wt.-% MgO,
d) the remainder being impurities.

6. Mass according to claim 1, wherein the Jacobsite spinel comprises:
a) 23 to 30 wt.-% manganese, calculated as MnO,
b) 66 to 70 wt.-% iron, calculated as Fe₂O₃,
c) < 15 wt.-% MgO,
d) the remainder being impurities.

7. Mass according to claim 1, wherein at least one spinel is a fused spinel.

8. Mass according to claim 1, wherein the MgO sinter is provided in a grain fraction < 8 mm and at least one spinel is provided in a grain fraction < 5 mm.

9. Mass according to claim 1, wherein the MgO sinter is provided in a grain fraction < 5 mm.

10. Mass according to claim 1, wherein at least one spinel is provided in a grain fraction < 3 mm.

11. Mass according to claim 1, wherein the MgO sinter is at least partially replaced by fused magnesia.

12. Mass according to claim 1, being free of chromium-containing components.

13. Use of a mass according to one of claims 1 to 12 for manufacturing fired refractory workpieces.

14. Use of a workpiece according to claim 13 in furnaces, in which said workpiece is exposed to an alkali- or alkali salt attack.

## Revendications

1. Masse céramique réfractaire contenant :
a) 60 à 99 % en poids de fritté de MgO et/ou de magnésie frittée ainsi que
b) 1 à 40 % en poids d'au moins un spinelle du type galaxite ou du type jacobsite.

2. Masse selon la revendication 1 contenant :
a) 85 à 97 % en poids de fritté de MgO ainsi que
b) 3 à 15 % en poids d'au moins un spinelle du type galaxite ou jacobsite.

3. Masse selon la revendication 1, où le spinelle de galaxite se compose de :
a) 25 à 55 % en poids de manganèse, calculé sous forme MnO,
b) 45 à 65 % en poids de Al₂O₃,
c) < 15 % en poids de MgO,
d) < 5 % en poids de fer, calculé sous forme FeO,
e) le reste d'impuretés.

4. Masse selon la revendication 3, où le spinelle de galaxite se compose de :
a) 35 à 42 % en poids de manganèse, calculé sous forme MnO,
b) 45 à 55 % en poids de Al₂O₃,
c) < 5 % en poids de MgO,
d) < 5 % en poids de fer, calculé sous forme FeO,
e) le reste d'impuretés.

5. Masse selon la revendication 1, où le spinelle de jacobsite se compose de :
a) 15 à 35 % en poids de manganèse, calculé sous forme MnO,
b) 60 à 70 % en poids de fer, calculé sous forme Fe₂O₃,
c) < 22 % en poids de MgO,
d) le reste d'impuretés.

6. Masse selon la revendication 1, où le spinelle de jacobsite se compose de :
a) 23 à 30 % en poids de manganèse, calculé sous forme MnO,
b) 66 à 70 % en poids de fer, calculé sous forme Fe₂O₃,
c) < 15 % en poids de MgO,
d) le reste d'impuretés.

7. Masse selon la revendication 1, où au moins un spinelle est un spinelle fritté.

8. Masse selon la revendication 1, où le fritté de MgO se situe dans une fraction granulométrique < 8 mm et au moins un spinelle dans une fraction granulométrique < 5 mm.

9. Masse selon la revendication 1, où le fritté de MgO se situe dans une fraction granulométrique < 5 mm.

10. Masse selon la revendication 1, où au moins un spinelle se situe dans une fraction granulométrique < 3 mm.

11. Masse selon la revendication 1, où le fritté de MgO est remplacé au moins partiellement par de la magnésie frittée.

12. Masse selon la revendication 1, exempte de composants contenant du Cr.

13. Utilisation de la masse selon l'une des revendications 1 à 12 pour fabriquer des pièces moulées réfractaires cuites.

14. Utilisation d'une pièce moulée selon la revendication 13, la pièce moulée étant exposée à une attaque à l'alcali ou au sel alcalin.
